(19) **Europäisches Patentamt / European Patent Office / Office européen des brevets**

(11) **EP 4 578 927 A1**

(12) **EUROPEAN PATENT APPLICATION**
published in accordance with Art. 153(4) EPC

(43) Date of publication:
**02.07.2025 Bulletin 2025/27**

(21) Application number: **23863515.5**

(22) Date of filing: **07.09.2023**

(51) International Patent Classification (IPC):
**C09K 5/14** (2006.01)    **B01L 7/00** (2006.01)
**C22C 13/00** (2006.01)    **B22F 1/054** (2022.01)

(52) Cooperative Patent Classification (CPC):
**B01L 7/00; B22F 1/054; C09K 5/14; C22C 13/00**

(86) International application number:
**PCT/KR2023/013381**

(87) International publication number:
**WO 2024/054051 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.09.2022 KR 20220114146**

(71) Applicant: **Bioneer Corporation**
**Daejeon 34302 (KR)**

(72) Inventors:
• **PARK, Han-Oh**
  **Sejong 30151 (KR)**
• **KIM, Jae-Ha**
  **Daejeon 34169 (KR)**
• **YUN, Kug Jin**
  **Daejeon 35347 (KR)**

(74) Representative: **Mathys & Squire**
**Theatinerstraße 7**
**80333 München (DE)**

(54) **COMPOSITE MATERIAL FOR THERMAL BLOCK OF THERMAL CYCLER, AND THERMAL BLOCK OF LOW-SPECIFIC-HEAT THERMAL CYCLER, MANUFACTURED USING SAME**

(57)    The present invention relates to a composite material for a thermal block of a thermal cycler. The composite material has both low specific heat characteristics and remarkably improved thermal conductivity, and thus, when the temperature of a thermal block, which is manufactured using the composite material, rises and falls, deviation in temperature change rate between a plurality of unit thermal blocks and/or in different areas in a unit thermal block can be remarkably reduced such that a PCR thermal cycler including the thermal block can ensure reliability even in ultrafast PCR.

FIG. 1

# EP 4 578 927 A1

**Description**

[Technical Field]

The present invention relates to a composite material for a thermal block of a thermal cycler, and more particularly, to a composite material for a thermal block of a thermal cycler having excellent thermal conductivity and low specific heat, and a low-specific-heat thermal block of a thermal cycler manufactured using the same.

[Background Art]

Recently, in accordance with the development of industry, the number of heat radiating and heating electronic products has increased, and techniques for materials having excellent thermoelectric characteristics have been recognized as significantly important fields. The importance is growing bigger in fields of a heat radiating part of a personal computer, a heat radiator of a light emitting diode (LED), and a thermal block part of a thermal cycler. In particular, the thermal cycler is basic diagnostic equipment required for genetic diagnosis, and as the importance thereof increases, heat transfer techniques for fast diagnosis have attracted great attention.

A polymerase chain reaction (PCR) thermal cycler is the most important equipment in a biotechnology field, particularly, in a genetic diagnosis field, and the PCR is a DNA replication technology called polymerase chain reaction (PCR) developed by Mullis et al., in 1983. The PCR is a method that continuously replicates template DNA using enzymes, and the PCR is divided into three stages: a denaturation (melting) stage of separating a double-stranded template DNA to be replicated to single strands, an annealing stage of binding several tens of bases of primers to the separated single strand so that the primer designates a reaction start site and helps an enzymatic reaction to start, and an extension stage of performing DNA replication from the site to which the primer is bound to produce complete double-stranded DNA.

When the three stages are performed, the amount of DNA is theoretically doubled, and when the process is repeated n times, the amount of DNA is theoretically increased to 2n times.

In general, a thermal block capable of controlling a temperature is used in a PCR thermal cycler, and the thermal block controls the temperature by periodically repeating temperature increase and decrease according to a predetermined time interval.

A core part of the polymerase chain reaction (PCR) thermal cycler is a thermal block having excellent thermal characteristics. Due to the nature of the PCR, temperature increases and decreases are repeated, and in this case, a thermal block having high thermal conductivity and low specific heat characteristics is required. So far, the thermal block has been manufactured using aluminum metal, and silver metal has been used for a fast PCR thermal cycler.

However, specific heat performance of aluminum used in such a PCR thermal cycler is lowered, and thus, aluminum is difficult to use in the fast PCR, which is currently the biggest problem. In addition, a method of using silver is problematic in terms of economic effectiveness because silver is expensive. Therefore, studies on various thermally conductive materials for solving the above problems have been continuously conducted.

In order to solve these problems, a thermal block manufactured using a composite material in which a tin powder having excellent specific heat characteristics and a metal powder having excellent thermal conductivity are mixed has been provided.

However, in a PCR thermal cycler equipped with multiple unit thermal blocks, since the thermal conductivity characteristics of the unit thermal blocks are poor, there is a disadvantage in that the reliability of the PCR thermal cycler is reduced when ultra-fast PCR is performed due to large deviations in the rate of temperature increase and rate of temperature decrease between the unit thermal blocks or in different regions within a single unit thermal block.

Therefore, there is a need to develop a composite material that may provide a thermal block of a thermal cycler that has excellent specific heat characteristics and may also significantly improve thermal conductivity characteristics.

**[Disclosure]**

[Technical Problem]

An object of the present invention is to provide a composite material for a thermal block of a thermal cycler having both low specific heat characteristics and thermal conductivity characteristics.

Another object of the present invention is to provide a low-specific-heat thermal block of a thermal cycler that has excellent thermal conductivity characteristics and may significantly reduce deviations in the rate of temperature change during the temperature increases and decreases.

Still another object of the present invention is to provide a PCR thermal cycler including the thermal block described above that may ensure reliability even in ultra-fast PCR.

[Technical Solution]

In one general aspect, a composite material for a thermal block of a thermal cycler contains: a powder metal that is a first metal or an alloy containing the first metal; and

a metal nanowire having a core-shell structure in which a shell containing a third metal is positioned on a core containing a second metal.

In the composite material for a thermal block of a thermal cycler according to an embodiment of the present invention, the first metal may be tin, and the alloy may be one or more selected from the group consisting of tin-silver, tin-copper, tin-aluminum, tin-bismuth, tin-antimony, tin-copper-bismuth, tin-silver-bismuth, tin-copper-antimony, tin-silver-antimony, tin-copper-silver, tin-copper-silver-antimony, and tin-copper-silver-bismuth.

In the composite material for a thermal block of a thermal cycler according to an embodiment of the present invention, the second metal may be copper, and the third metal may be silver or gold.

In the composite material for a thermal block of a thermal cycler according to an embodiment of the present invention, the metal nanowire may be a silver-coated copper nanowire.

In the composite material for a thermal block of a thermal cycler according to an embodiment of the present invention, a peak intensity of Ag $3d_{5/2}$ of silver ($I_1$) and a peak intensity of Cu $2p_{3/2}$ of copper ($I_2$) of the metal nanowire in an X-ray photoelectron spectroscopy spectrum may satisfy the following Expression **1.**

$$(\text{Expression 1})$$

$$I_2/I_1 \leq 0.2$$

In the composite material for a thermal block of a thermal cycler according to an embodiment of the present invention, the metal nanowire may have a diameter of 100 to 500 nm and an aspect ratio of 5 to 100.

In the composite material for a thermal block of a thermal cycler according to an embodiment of the present invention, a ratio ($D_p/D_w$) of a particle diameter of the powder metal ($D_p$) :a diameter of the metal nanowire ($D_w$) may be 1:0.0001 to 0.01.

In the composite material for a thermal block of a thermal cycler according to an embodiment of the present invention, a weight ratio of the powder metal:the metal nanowire may be 1:0.001 to 0.1.

In another general aspect, there is provided a low-specific-heat thermal block of a thermal cycler manufactured by sintering, molding, rolling, or casting the composite material described above.

In still another general aspect, a low-specific-heat thermal block of a thermal cycler contains tin or a tin alloy; and a silver-coated copper nanowire.

In the low-specific-heat thermal block of a thermal cycler according to an embodiment of the present invention, a weight ratio of the tin or the tin alloy:the silver-coated copper nanowire may be 1:0.001 to 0.1.

In the low-specific-heat thermal block of a thermal cycler according to an embodiment of the present invention, a peak intensity of Ag $3d_{5/2}$ of silver ($I_1$) and a peak intensity of Cu $2p_{3/2}$ of copper ($I_2$) of the silver-coated copper nanowire in an X-ray photoelectron spectroscopy spectrum may satisfy the following Expression 1.

$$(\text{Expression 1})$$

$$I_2/I_1 \leq 0.2$$

In the low-specific-heat thermal block of a thermal cycler according to an embodiment of the present invention, a thermal conductivity of the thermal block may be 70 to 100 W/ (m·K) at 21°C.

In still another general aspect, a polymerase chain reaction (PCR) thermal cycler includes: a heating element; and a thermal block having one end in contact with one surface of the heating element and the other end positioned opposite to the one end and having an insertion hole, wherein the thermal block is formed by sintering, molding, rolling, or casting the composite material described above.

In the polymerase chain reaction (PCR) thermal cycler provided according to an embodiment of the present invention, the thermal block may satisfy the following Expression 2.

$$(\text{Expression 2})$$

$$H_a - H_b \leq \pm 0.5 \ °C/sec$$

In Expression 2, $H_a$ is a heating rate in a region of 0.1 to 0.3 t defined as a region A, and $H_b$ is a heating rate in a region of 0.7 t to 1.0 t defined as a region B, based on one end in contact with one surface of a heating element in a thermal block having a height of t.

[Advantageous Effects]

The composite material for a thermal block of a thermal cycler of the present invention contains a powder metal that is a first metal or an alloy containing the first metal; and a metal nanowire having a core-shell structure in which a shell containing a third metal is positioned on a core containing a second metal, such that the composite material has low specific heat characteristics and may also significantly improve thermal conductivity characteristics.

In addition, in the case of the thermal block manufactured using the composite material described above, it is possible to significantly reduce deviations in the rate of temperature change between multiple unit thermal blocks and/or in different regions within a single unit thermal block when the temperature of the thermal block increases and decreases.

Furthermore, the PCR thermal cycler including the thermal block described above may ensure reliability even in ultra-fast PCR.

[Description of Drawings]

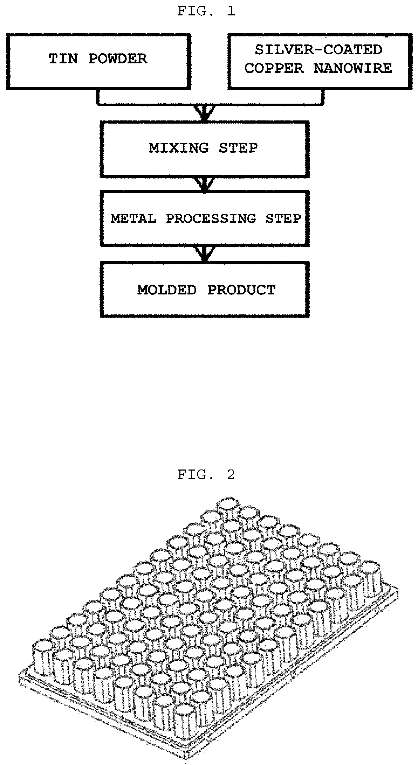

FIG. 1 is a diagram schematically showing a sintering, molding, rolling, or casting process of a low-specific-heat composite material containing tin or a tin alloy and a silver-coated copper nanowire according to the present invention. FIG. 2 is a schematic view illustrating a three-dimensional view of a thermal block molded product of a thermal cycler manufactured by sintering, molding, rolling, or casting the low-specific-heat composite material according to the present invention.

[Best Mode]

Hereinafter, a composite material for a thermal block of a thermal cycler according to the present invention and a low-specific-heat thermal block of a thermal cycler including the same will be described in more detail with reference to embodiments. However, the following embodiments are only for reference to explain the present invention in detail, and the present invention is not limited thereto and may be implemented in various forms.

In addition, unless otherwise defined, all the technical terms and scientific terms have the same meanings as commonly understood by those skilled in the art to which the present invention pertains. The terms used in the description of the present application are merely used to effectively describe a specific embodiment, but are not intended to limit the present invention.

In addition, a description of the known effects and configurations unnecessarily obscuring the gist of the present invention will be omitted in the following description. Hereinafter, a unit used in the present specification without special mention is based on a weight, and as an example, a unit of % or a ratio refers to wt% or a weight ratio.

In addition, unless the context clearly indicates otherwise, singular forms used in the specification of the present invention may be intended to include plural forms.

In addition, in the present specification, unless explicitly described to the contrary, "comprising" any components will be understood to imply further inclusion of other components rather than the exclusion of any other components.

In addition, a numerical range used in the present specification may include upper and lower limits and all values within these limits, increments logically derived from a form and span of a defined range, all double limited values, and all possible combinations of the upper and lower limits in the numerical range defined in different forms. Unless otherwise specifically defined in the specification of the present invention, values out of the numerical range that may occur due to experimental errors or rounded values also fall within the defined numerical range.

A composite material for a thermal block of a thermal cycler according to an embodiment of the present invention contains: a powder metal that is a first metal or an alloy containing the first metal; and a metal nanowire having a core-shell structure in which a shell containing a third metal is positioned on a core containing a second metal.

A gene amplification technology using polymerase chain reaction (PCR) is widely used for research and development and diagnostic purposes in life sciences, genetic engineering, and medicine fields.

PCR is a reaction that amplifies the amount of gene by repeatedly performing the stages described above to continuously replicate a template gene through the denaturation (melting) stage, the annealing stage, and the extension stage using enzymes.

In this case, the denaturation stage is usually performed at 95°C, the annealing stage and the extension stage are performed at 75°C or lower, and as described above, in order to amplify the gene by repeatedly performing each stage, it is required to repeatedly increase and decrease a temperature of a gene sample.

For gene amplification, a device that may control the temperature of the gene sample is essential, and a thermal cycler is widely used as such a device.

In general, a thermal block capable of controlling a temperature is used in a PCR thermal cycler, and the thermal block controls the temperature by periodically repeating temperature increase and decrease according to a predetermined time interval. In this case, the thermal block is required to have excellent thermal conductivity characteristics and low specific heat characteristics, and is generally manufactured using aluminum metal, and in a case of a fast PCR thermal cycler, silver metal is used.

However, aluminum has poor specific heat characteristics, which limits its use in fast PCR, and the method of using silver is not economically effective, which limits its use.

In order to solve these problems, in the related art, a thermal block manufactured using a composite material in which a tin powder and a metal powder having excellent thermal conductivity are mixed has been provided. However, in a PCR thermal cycler equipped with multiple unit thermal blocks, since thermal conductivity characteristics of a unit thermal block are deteriorated, there is a problem in that, when ultra-fast PCR is performed, the reliability of the PCR thermal cycler is reduced due to large deviations in the rate of temperature increase and rate of temperature decrease between the unit thermal blocks and/or in different regions within a single unit thermal block.

On the other hand, since the composite material for a thermal block of a thermal cycler according to an embodiment of the present invention contains a powder metal and a metal nanowire having a core-shell structure, the composite material not only has low specific heat characteristics and may significantly improve thermal conductivity characteristics, but is also advantageous in terms of economic effectiveness. Thus, a thermal block manufactured using the composite material described above has economic effectiveness and may also significantly reduce deviations in the rate of temperature change between multiple unit thermal blocks and/or in different regions within a single unit thermal block when the temperature of the thermal block increases and decreases. In addition, a PCR thermal cycler including the thermal block described above may ensure reliability even in ultra-fast PCR.

Specifically, the powder metal and the metal nanowire having the core-shell structure contained in the composite material for a thermal block of a thermal cycler may be compression-molded to manufacture a thermal block of a thermal cycler. In this case, a flexible metal nanowire is densely compressed together with the powder metal and forms a network between the metal nanowires to provide a uniform heat transfer path within the thermal block, which may significantly improve thermal conductivity characteristics and significantly reduce the deviations in the rate of temperature increase and rate of temperature decrease between unit thermal blocks and/or in different regions within a single unit thermal block.

On the other hand, when manufacturing a thermal block using a composite material in which a tin powder and a metal powder having excellent thermal conductivity are mixed as in the related art, there is a limit to uniformly dispersing the metal powder having excellent thermal conductivity, and accordingly, the heat transfer path within the block is inevitably formed randomly, resulting in large deviations in the rate of temperature increase and rate of temperature decrease between unit thermal blocks and/or in different regions within a single unit thermal block.

As an embodiment, in the first metal or the alloy containing the first metal, which is a powder metal, the first metal may be tin, and the alloy may be one or more selected from the group consisting of tin-silver, tin-copper, tin-aluminum, tin-bismuth, tin-antimony, tin-copper-bismuth, tin-silver-bismuth, tin-copper-antimony, tin-silver-antimony, tin-copper-silver, tin-copper-silver-antimony, and tin-copper-silver-bismuth.

As tin or an alloy containing the tin is used as a powder metal in the composite material for a thermal block of a thermal cycler, low specific heat characteristics may be imparted to a thermal block manufactured using the composite material.

As a specific example, an average particle diameter of the powder metal may be 40 to 200 $\mu$m, specifically, 70 to 140 $\mu$m, and more specifically, 80 to 120 $\mu$m.

In an embodiment, in the metal nanowire having the core-shell structure contained in the composite material, the second metal contained in the core may be a metal having excellent thermal conductivity compared to the first metal, and as an advantageous example, the second metal may be copper considering both thermal conductivity characteristics and economic effectiveness.

As a specific example, in the metal nanowire having the core-shell structure, the third metal contained in the shell may be a metal having thermal conductivity at a level similar to or equal to or higher than that of the second metal and also satisfying the following Expression **1**.

In this case, a level similar to or equal to or higher than the thermal conductivity of the second metal may mean a level of at least 70% or more, 80% or more, 90% or more, or 100% or more of the thermal conductivity of the second metal, and an upper limit is not limited.

$$(\text{Expression } 1)$$

$$0.6 \leq C1/C3 \leq 2$$

(In Expression 1, C1 is specific heat of the first metal, and C3 is specific heat of the third metal.)

As a specific example, a ratio (C1/C3) of the specific heat of the first metal (C1) to the specific heat of the third metal (C3) may be 0.6 or more, 0.7 or more, 0.8 or more, or 0.9 or more, and may be substantially 2 or less.

As described above, since the third metal contained in the shell of the metal nanowire has thermal conductivity at a level similar to or equal to or higher than the thermal conductivity of the second metal and satisfies the following Expression 1, the third metal is contained in the composite material for a thermal block of a thermal cycler together with the powder metal that is the first metal or the alloy containing the first metal, such that a thermal block manufactured using the composite material may have low specific heat characteristics as well as significantly excellent thermal conductivity characteristics.

As a specific example, the third metal may be silver or gold.

As an embodiment, a diameter of the metal nanowire having the core-shell structure may be 100 to 500 nm, specifically, 150 to 500 nm, and more specifically, 200 to 500 nm, and an aspect ratio of the metal nanowire may be 5 to 100, preferably, 8 to 60, and more preferably, 10 to 40.

As the diameter and the aspect ratio of the metal nanowire contained in the composite material for a thermal block of a thermal cycler satisfy the ranges described above, when a thermal block is manufactured using the same, a stable and uniform heat transfer path may be provided within the thermal block.

As an advantageous example, the metal nanowire may be a silver-coated copper nanowire.

The silver-coated copper nanowire has excellent thermal conductivity characteristics as well as low specific heat characteristics and is contained in the composite material for a thermal block of a thermal cycler together with the powder metal that is the first metal or the alloy containing the first metal, which is advantageous in improving thermal characteristics of a thermal block manufactured using the composite material. In addition, the silver-coated copper nanowire does not require a large amount of cost to significantly improve thermal characteristics, which is preferable in terms of economic effectiveness.

As a specific example, when the metal nanowire is a silver-coated copper nanowire, a peak intensity of Ag $3d_{5/2}$ of silver ($I_1$) and a peak intensity of Cu $2p_{3/2}$ of copper ($I_2$) of the metal nanowire in an X-ray photoelectron spectroscopy spectrum may satisfy the following Expression 2.

$$\text{(Expression 2)}$$

$$I_2/I_1 \leq 0.2$$

Copper is easily oxidized when exposed to air and copper oxide is formed, which may deteriorate electrical and thermal characteristics. However, as described above, as the metal nanowire, that is, the silver-coated copper nanowire, satisfies Expression 2, the silver-coated copper nanowire has excellent oxidation stability, which may be advantageous in maintaining the original electrical and thermal characteristics of the silver-coated copper nanowire.

In a specific example, a ratio ($I_2/I_1$) of the peak intensity of Cu $2p_{3/2}$ of copper ($I_2$) to the peak intensity of Ag $3d_{5/2}$ of silver ($I_1$) in the X-ray photoelectron spectroscopy spectrum may be 0.2 or less, preferably, 0.1 or less, more preferably, 0.05 or less, and still more preferably 0.03 or less, and may be 0.001 or more.

When the ratio ($I_2/I_1$) of the peak intensity of Cu $2p_{3/2}$ of copper ($I_2$) to the peak intensity of Ag $3d_{5/2}$ of silver ($I_1$) in the X-ray photoelectron spectroscopy spectrum exceeds 0.2, copper exposed to the outside in the metal nanowire having the core-shell structure may be oxidized, which may reduce the oxidation stability of the metal nanowire. Therefore, it is preferable that the ratio ($I_2/I_1$) of the peak intensity of Cu $2p_{3/2}$ of copper ($I_2$) to the peak intensity of Ag $3d_{5/2}$ of silver ($I_1$) in the X-ray photoelectron spectroscopy spectrum satisfies the range described above.

As a specific example, a thickness of the silver coating, that is, the shell may be 5 to 40 nm, specifically, 5 to 30 nm, more specifically, 5 to 20 nm, and still more specifically, 6 to 10 nm.

When the thickness of the shell is less than 5 nm, the oxidation of copper contained in the core cannot be effectively suppressed, and when the thickness of the shell is more than 40 nm, copper oxide may be formed due to a reduction in uniformity of the shell positioned on the core, which is not advantageous in terms of economic effectiveness. Therefore, it is preferable that the thickness of the shell satisfies the range described above.

As an embodiment, as for the powder metal and the metal nanowire contained in the composite material for a thermal block of a thermal cycler, a ratio ($D_p/D_w$) of an average particle diameter of the powder metal ($D_p$):a diameter of the metal nanowire ($D_w$) may be 1:0.0001 to 0.01, and specifically, 1:0.0005 to 0.005.

As the powder metal and the metal nanowire contained in the composite material for a thermal block of a thermal cycler have the ratio of the average particle diameter of the powder metal:the diameter of the metal nanowire satisfying the range described above, compactness of the a thermal block may be improved when manufacturing the thermal block using the composite material.

In this case, the composite material for a thermal block of a thermal cycler may contain the metal nanowire in an amount of 0.1 to 60 wt%, specifically, 0.5 to 30 wt%, and more specifically, 1 to 10 wt%.

In an embodiment, a weight ratio of the powder metal:the metal nanowire contained in the composite material for a thermal block of a thermal cycler may be 1:0.001 to 0.5, advantageously, 1:0.001 to 0.1, more advantageously, 1:0.005 to 0.1, and still advantageously, 1:0.01 to 0.05.

As an example, the composite material for a thermal block of a thermal cycler may be prepared by physically mixing the powder metal and the metal nanowire. When the weight ratio of the powder metal:the metal nanowire is less than 0.001, the powder metal and the metal nanowire may be uniformly mixed, but there is a limit to formation of a heat transfer path through network formation of the metal nanowires, and thus, there is a limit to improving the thermal conductivity characteristics. In addition, when the weight ratio of the powder metal: the metal nanowire exceeds 0.5, the mixing of the powder metal and the metal nanowire cannot be uniform, which may deteriorate the thermal conductivity characteristics, and an unnecessarily large amount of metal nanowires may be contained, which may reduce economic effectiveness. Therefore, it is preferable that the weight ratio of the powder metal:metal nanowire contained in the composite material for a thermal block of a thermal cycler satisfies the range described above.

In this case, the composite material for a thermal block of a thermal cycler may be prepared using a mixer that rotates the powder metal and the metal nanowire satisfying the weight ratio described above at a high speed. As an example, a mixer that rotates at a high speed may have a rotation speed of 150 to 1,000 rpm, specifically, 300 to 800 rpm, more specifically, 400 to 600 rpm.

In addition, the mixing process using the mixer that rotates at a high speed for uniform mixing of the powder metal and the metal nanowire may be performed one or more, two or more, or three or more times, and although an upper limit thereof is not limited, it is obvious that the mixing process may be performed practically 10 times or less.

The present invention provides a low-specific-heat thermal block of a thermal cycler manufactured by sintering, molding, or casting the composite material for a thermal block of a thermal cycler described above.

In addition, the present invention provides a low-specific-heat thermal block of a thermal cycler containing tin or a tin alloy; and a silver-coated copper nanowire.

Here, the tin alloy is similar or identical to the alloy containing the first metal described above, and a detailed description thereof is omitted.

As an embodiment, a weight ratio of the tin or the tin alloy:the silver-coated copper nanowire may be 1:0.001 to 0.5, advantageously, 1:0.001 to 0.1, more advantageously, 1:0.005 to 0.1, and even more advantageously 1:0.01 to 0.05.

As the tin or the tin alloy and the silver-coated copper nanowire are contained in the thermal block at the weight ratio described above, a network may be formed between the silver-coated copper nanowires to provide a uniform heat transfer path, thereby significantly reducing the deviations in the rate of temperature increase and rate of temperature decrease between the unit thermal blocks and/or in different regions within a single unit thermal block.

As an example, a peak intensity of Ag $3d_{5/2}$ of silver ($I_1$) and a peak intensity of Cu $2p_{3/2}$ of copper ($I_2$) of the silver-coated copper nanowire in an X-ray photoelectron spectroscopy spectrum may satisfy the following Expression 2.

$$(\text{Expression 2})$$

$$I_2/I_1 \leq 0.2$$

As the silver-coated copper nanowire satisfies Expression 2, the silver-coated copper nanowire has excellent oxidation stability, which may be advantageous in maintaining the original electrical and thermal characteristics of the silver-coated copper nanowire.

In a specific example, a ratio ($I_2/I_1$) of the peak intensity of Cu $2p_{3/2}$ of copper ($I_2$) to the peak intensity of Ag $3d_{5/2}$ of silver ($I_1$) in the X-ray photoelectron spectroscopy spectrum may be 0.2 or less, preferably, 0.1 or less, more preferably, 0.05 or less, and still more preferably 0.03 or less, and may be 0.001 or more.

When the ratio ($I_2/I_1$) of the peak intensity of Cu $2p_{3/2}$ of copper ($I_2$) to the peak intensity of Ag $3d_{5/2}$ of silver ($I_1$) in the X-ray photoelectron spectroscopy spectrum exceeds 0.2, copper exposed to the outside of the silver-coated copper nanowire may be oxidized, which may reduce the oxidation stability of the silver-coated copper nanowire. Therefore, it is preferable that the ratio ($I_2/I_1$) of the peak intensity of Cu $2p_{3/2}$ of copper ($I_2$) to the peak intensity of Ag $3d_{5/2}$ of silver ($I_1$) in the X-ray photoelectron spectroscopy spectrum satisfies the range described above.

In this case, the silver-coated copper nanowire is similar or identical to the metal nanowire having the core-shell structure described above, and thus, detailed descriptions of the diameter and aspect ratio of the silver-coated copper nanowire and thickness of the silver coating layer are omitted.

In an embodiment, a thermal conductivity of the low-specific-heat thermal block of a thermal cycler may be 70 to 150 W/ (m·K), specifically, 70 to 100 W/ (m·K), and more specifically, 70 to 80 W/ (mK) at 21°C.

As a specific example, the low-specific-heat thermal block of a thermal cycler may have physical properties such as a density of 5 to 20 g/mL, and specifically, 5 to 10 g/mL, a heat capacity of 0.2 to 1 J/ (g·K), and specifically, 0.2 to 0.5 J/ (g·K), and a volumetric heat capacity of 1 to 2 J/ (cm$^3$·K), and specifically, 1 to 1.8 J/(cm$^3$·K).

As described above, the low-specific-heat thermal block of a thermal cycler contains the tin or the tin alloy and the silver-coated copper nanowire satisfying Expression 2, and has the physical properties described above, and thus, in the temperature increase and decrease of the thermal block, the low-specific-heat thermal block of a thermal cycler may significantly reduce the deviations in the rate of temperature change between multiple unit thermal blocks and/or in different regions within a single unit thermal block.

In addition, the present invention provides a polymerase chain reaction (PCR) thermal cycler including: a heating element; and a thermal block having one end in contact with one surface of the heating element and the other end positioned opposite to the one end and having an insertion hole, wherein the thermal block is formed by sintering, molding, rolling, or casting the composite material described above.

The PCR thermal cycler according to an embodiment of the present invention includes the thermal block formed by using the composite material described above that may significantly improve the heat transfer efficiency, such that gene amplification reaction efficiency may be improved, and reliability may be ensured even in ultra-fast PCR.

As a specific example, the heating element may be a heat source capable of transferring heat to the thermal block and performing a cooling function since one end of the thermal block is in contact with one surface of the heating element.

As a specific example, the heating element may be a Peltier element, the Peltier element performs heating and cooling in the same element while switching a current direction, the cooling is performed at a lower surface of the Peltier element, and the heating is performed at an upper surface in contact with one end of the thermal block.

In this case, a heat sink may be attached to the lower surface of the Peltier element to improve cooling efficiency.

As an embodiment, the thermal block may include an insertion hole formed at the other end positioned opposite to the one end in contact with the one surface of the heating element, a reagent or a sample container may be inserted into the thermal block through the insertion hole so that an inner surface of the thermal block and an outer surface of the container are in surface contact to induce a temperature change of the reagent or the sample. In this case, the shape of the insertion hole may be the same as the shape of the outer surface of the reagent or the sample container, and the present invention is not limited by the shape of the insertion hole.

As an embodiment, the thermal block may satisfy the following Expression 3.

$$(\text{Expression } 3)$$

$$H_a - H_b \leq \pm 0.5 \ °C/sec$$

In Expression 3, $H_a$ is a heating rate in a region of 0.1 to 0.3 t defined as a region A, and $H_b$ is a heating rate in a region of 0.7 t to 1.0 t defined as a region B, based on one end in contact with one surface of a heating element in a thermal block having a height of t.

In this case, the heating rate may be a ratio ($\Delta T/\Delta s$) of a temperature change ($\Delta T$) measured based on an initial temperature to a time change ($\Delta s$) calculated by measuring a temperature in each of a region A and a region B after 15 seconds when increasing the temperature to 95°C using the heating element.

In a specific example, a difference in heating rates in the region A and the region B ($H_a - H_b$) may be $\pm 0.5$ °C/sec or less, $\pm 0.4$ °C/sec or less, $\pm 0.3$ °C/sec or less, or $\pm 0.2$ °C/sec or less, and although a lower limit thereof is not limited, the difference may be substantially $\pm 0.01$ °C/sec or more, and more substantially, $\pm 0.05$ °C/sec or more.

As the thermal block satisfies Expression 3, the gene amplification reaction efficiency may be improved, and the reliability of the PCR thermal cycler may be ensured even in ultra-fast PCR.

In addition, a difference in cooling rates in the region A and the region B may be similar or identical to a difference in heating rates in the region A and the region B described above. In this case, the cooling rate may be a ratio ($\Delta T/\Delta s$) of a temperature change ($\Delta T$) measured based on the initial temperature to the time change ($\Delta s$) calculated by measuring the temperature in each of the region A and the region B after 15 seconds when decreasing the temperature from 95°C to 25°C using the heating element.

As an embodiment, an absolute value of a rate of temperature increase and a rate of temperature decrease (ramping rate) of the PCR thermal cycler may be 3.0°C or higher.

Specifically, the rate of temperature increase and the rate of temperature decrease of the PCR thermal cycler may be different from each other independently.

As an example, the rate of temperature increase of the PCR thermal cycler may be 3.0°C or higher, specifically, 3.5°C or higher, and more specifically, 3.8°C or higher, and an upper limit value thereof is not limited and may be 10°C or lower, and substantially 8°C or lower.

Unlike the rate of temperature increase of the PCR thermal cycler described above, the rate of temperature decrease of the PCR thermal cycler has a negative value. The rate of temperature decrease of the PCR thermal cycler has a negative value and may be, based on the absolute value, 3.0°C or higher, specifically, 3.05°C or higher, more specifically, 3.08°C or higher, and an upper limit thereof is not limited and may be 8°C or lower, and practically, 6°C or lower.

In addition, the PCR thermal cycler may include, in addition to the heating element and the thermal block described above, general components known in the art, such as a controller, an optical system, a fluorescence detection device, and an analysis device.

Hereinafter, the composite material for a thermal block of a thermal cycler according to the present invention and the thermal block including the same will be described in more detail through examples. However, the following examples are only a reference to explain the present invention in detail, and the present invention is not limited thereto and may be implemented in various forms.

In addition, unless otherwise defined, all the technical terms and scientific terms used have the same meanings as commonly understood by those skilled in the art to which the present invention pertains. The terms used in the description of the present application are merely used to effectively describe a specific embodiment, but are not intended to limit the present invention.

(Preparation Example 1)

1,200 ml of water (ultrapure water) and 15.0 g of copper nanowires prepared by the preparation example were added to a 5 L flask, and stirring was performed at 10,000 rpm using a homomixer (K-Corporation, Primix). 22.5 g of ethylenediaminetetraacetic acid disodium salt (EDTA-2Na Dihydrate, Samchun Pure Chemical Co., Ltd.) was dissolved in 150 ml of water (ultrapure water) and added thereto in order to remove an oxide film on the copper nanowire, and stirring was performed at 10,000 rpm for 3 minutes. 13.1g of L-ascorbic acid ($C_6H_8O_6$, Samchun Pure Chemical Co., Ltd.) was dissolved in 150 ml of water (ultrapure water) and added thereto, and stirring was performed again for 3 minutes.

In order to perform a primary silver coating on the copper nanowires from which the oxide film was removed, 150 ml of water (ultrapure water) and 1.67 g of silver nitrate ($AgNO_3$, Juntech) were mixed to prepare a first silver nitrate solution, and the solution was added at a rate of 10 ml per minute for about 15 minutes using a peristaltic pump (Leadfluid, BT100L) to allow a reaction to proceed.

Thereafter, the sample on which the primary silver coating was completed was washed with 2 L of water (ultrapure water) and dried to obtain a primary silver-coated copper nanowire sample.

Subsequently, in order to perform a secondary silver coating, the sample on which the primary silver coating was completed and 1,200 ml of water (ultrapure water) were placed in a 5 L flask, and stirring was performed at 10,000 rpm using a homomixer (K-Corporation, Primix). In order to stably remove copper ions, 22.5 g of ethylenediaminetetraacetic acid disodium salt (EDTA-2Na Dihydrate, Samchun Pure Chemical Co., Ltd.) was dissolved in 150 ml of water (ultrapure water), and stirring was performed at 10,000 rpm for 3 minutes.

21 g of potassium sodium tartrate tetrahydrate ($KNaC_4H_4O_6 \cdot 4H_2O$) as a reducing agent was dissolved in 150 ml of water (ultrapure water) and added, and stirring was performed again for 3 minutes. In order to perform the secondary silver coating, a silver nitrate solution was prepared by adding 655 ml of water (ultrapure water) to 4.23 g of silver nitrate, and then, 4.34 ml of ammonia water ($NH_4OH$, Samchun Pure Chemical Co., Ltd.) was added to prepare a second silver nitrate-ammonia complex solution. The prepared second silver-ammonia complex solution was added at a rate of 10 ml per minute and reacted for about 66 minutes.

After the reaction was completed, the separated metal nanowires were washed with 2 L of water (ultrapure water) using a filter paper and dried at room temperature for 24 hours to obtain copper nanowires thinly and uniformly coated with silver.

As a result of analyzing the length and the thickness of the obtained silver-coated copper nanowires, the length was measured to be 2.1 to 6.3 um and the thickness was measured to be 191 to 450 nm.

In addition, as a result of comparing a peak intensity of Ag $3d_{5/2}$ ($I_1$) and a peak intensity of Cu $2p_{3/2}$ ($I_2$) calculated from an XPS spectrum obtained by X-ray photoelectron spectroscopy (XPS, Thermo VG Scientific, Sigma Probe) of a surface of the silver-coated copper nanowire, it was confirmed that $I_2/I_1$ was 0.029.

(Preparation Example 2)

The same procedure as that of Preparation Example 1 was performed, except that the primary silver coating reaction was not performed, and in order to perform the secondary silver coating, a silver coating layer was formed on the copper nanowire using only a second silver-ammonia complex solution obtained by adding 655 ml of water (ultrapure water) to 12.2 g of silver nitrate to prepare a silver nitrate solution, and then adding 4.34 ml of ammonia water ($NH_4OH$, Samchun Pure Chemical Co., Ltd.).

At this time, as a result of comparing a peak intensity of Ag $3d_{5/2}$ ($I_1$) and a peak intensity of Cu $2p_{3/2}$ ($I_2$) calculated from an XPS spectrum, it was confirmed that $I_2/I_1$ was 0.41.

(Example 1)

A tin powder (average particle diameter: 100 $\mu$m) and the silver-coated copper nanowire prepared in Preparation Example 1 were mixed at a ratio of 99.5:0.5 based on the weight, and about 130 g of the mixture was placed in a high-speed flow mixer (HSFM-10-S, ESYN DMT) and mixed twice at 500 rpm for 10 minutes.

About 130 g of the mixture (composite material) mixed above was placed between upper and lower punches in a mold (inner center diameter 40.0 mm) formed of graphite, and the mold containing the mixture was mounted between presses of a vertical press structure in a high-temperature press device (D1P-20J; Daeheung Scientific Company), and then pressurized with a hydraulic cylinder and melt-molded at 260°C.

A processing process of manufacturing a molded product (thermal block) using the composite material containing the tin powder and the silver-coated copper nanowire is schematically illustrated in FIG. 1.

The molded specimen containing the tin and the silver-coated copper nanowire was subjected to non-destructive testing using an ultrasonic flaw detector (SISTSCAN 500, Kyungdo Yanghaeng Co., Ltd.). As a result, it was confirmed that the molded specimen containing the tin and the silver-coated copper nanowire was melt-molded without pores or defects.

The molding was performed under conditions of a melting temperature of 260°C and a retention time of 30 minutes. The sintered molded product was analyzed using a thermal diffusivity measuring device (Xenon Flash Instrument LFA 447; NETZSCH), and the thermal analysis results were summarized in Table 1.

(Examples 2 to 6)

The same procedure as that of Example 1 was performed, except that the mixing ratio of the tin powder: the silver-coated copper nanowire was set to 99:1 (Example 2), 98.5:1.5 (Example 3), 98:2 (Example 4), 97.5:2.5 (Example 5), and 97:3 (Example 6), the thermal analysis results of the respective sintered molded products were summarized in Table 1, and non-destructive testing was performed on the molded specimen of Example 3. From the non-destructive testing results of Example 3, it was confirmed that the molded specimen containing the tin and the silver-coated copper nanowire was melt-molded without pores or defects, similar to the results of Example 1.

(Example 7)

The same procedure as that of Example 3 was performed, except that the silver-coated copper nanowire prepared in Preparation Example 2 was used, and the thermal analysis results of the sintered molded product were summarized in Table 1.

(Example 8)

The same procedure as that of Example 3 was performed, except that the tin powder and the silver-coated copper nanowire were mixed using a mortar without using a high-speed flow mixer, and the thermal analysis results of the sintered molded product were summarized in Table 1.

From the results of non-destructive testing of the specimen molded using the mixture of the tin powder and the silver-coated copper nanowire mixed using the mortar, unlike the results of Examples 1 and 3, it was confirmed that pores or defects exceeding the standard occurred in the molded specimen containing the tin and the silver-coated copper nanowire.

(Comparative Example 1)

The same procedure as that of Example 1 was performed, except that the tin powder was used alone, and the thermal analysis results of the sintered molded product were summarized in Table 1.

(Comparative Example 2)

The same procedure as that of Example 3 was performed, except that a tin powder and a silver powder were mixed and used, and the thermal analysis results of the sintered molded product were summarized in Table 1.

[Table 1]

| | Component 1 | Component 2 | Mixing method | Thermal conductivity W/(m·K) at 21°C |
|---|---|---|---|---|
| Example 1 | Tin powder 99.5 wt% | Silver-coated copper nanowire (Preparation Example 1)_0.5 wt% | High-speed flow mixer | 72.08 |

(continued)

| | Component 1 | Component 2 | Mixing method | Thermal conductivity W/(m·K) at 21°C |
|---|---|---|---|---|
| Example 2 | Tin powder 99.0 wt% | Silver-coated copper nanowire (Preparation Example 1)_1.0 wt% | High-speed flow mixer | 72.98 |
| Example 3 | Tin powder 98.5 wt% | Silver-coated copper nanowire (Preparation Example 1)_1.5 wt% | High-speed flow mixer | 75.91 |
| Example 4 | Tin powder 98.0 wt% | Silver-coated copper nanowire (Preparation Example 1)_2.0 wt% | High-speed flow mixer | 72.17 |
| Example 5 | Tin powder 97.5 wt% | Silver-coated copper nanowire (Preparation Example 1)_2.5 wt% | High-speed flow mixer | 70.29 |
| Example 6 | Tin powder 97.0 wt% | Silver-coated copper nanowire (Preparation Example 1)_3.0 wt% | High-speed flow mixer | 72.75 |
| Example 7 | Tin powder 98.5 wt% | Silver-coated copper nanowire (Preparation Example 2)_1.5 wt% | High-speed flow mixer | 70.79 |
| Example 8 | Tin powder 98.5 wt% | Silver-coated copper nanowire (Preparation Example 1)_1.5 wt% | Mortar | 69.20 |
| Comparative Example 1 | Tin powder 100 wt% | - | - | 18.52 |
| Comparative Example 2 | Tin powder 98.5 wt% | Silver powder 1.5 wt% | High-speed flow mixer | 53.21 |

Referring to Table 1, it was observed that the thermal conductivity characteristics of Example 3 were the best, and it was found that all the specimens prepared using the composite material in which the tin powder and the silver-coated copper nanowire were mixed had improved thermal conductivity characteristics compared to the specimens prepared using only a tin powder (Comparative Example 1) and the composite material in which a tin powder and a silver powder were mixed (Comparative Example 2).

In addition, when comparing the thermal conductivity characteristics of Examples 3 and 7, it was confirmed that the surface properties of the silver-coated copper nanowires contained in the composite material affected the thermal conductivity characteristics.

Specifically, based on a ratio ($I_2/I_1$) of a peak intensity of Cu $2p_{3/2}$ ($I_2$) to a peak intensity of Ag $3d_{5/2}$ ($I_1$) calculated from an XPS spectrum, it was found that the thermal conductivity characteristics of the molded product using the composite material of Example 3 containing the silver-coated copper nanowires in which the silver coating layer positioned on the copper nanowire was uniformly and densely formed were superior to the thermal conductivity characteristics of the molded product using the composite material of Example 7 containing the silver-coated copper nanowire in which silver was not uniformly coated and copper was partially exposed.

(Experimental Example) Confirmation of heat transfer characteristics

In order to confirm heat transfer characteristics of the prepared specimens, the molded products of Examples 1, 3, and 7 and Comparative Examples 1 and 2 were attached onto a Peltier element, and the heat transfer characteristics were confirmed.

At this time, a voltage was applied to the Peltier element to increase the temperature of the molded product to 95°C, temperatures at a 0.2 t portion (region A) and a 0.8 t portion (region B) of the entire height t of the molded product were measured simultaneously based on a contact surface of the molded product in contact with the Peltier element, and the measurements were performed before and 15 seconds after the voltage was applied, respectively. The heat transfer characteristics of each molded product were compared by using a temperature change for 15 seconds in each region as a heating rate, and the results were summarized in Table 2.

[Table 2]

|  | Heating rate in region A ($H_a$) (°C/s) | Heating rate in region B ($H_b$) (°C/s) | $H_a - H_b$ (°C/s) |
|---|---|---|---|
| Example 1 | 5.11 | 4.79 | 0.32 |
| Example 3 | 5.26 | 5.08 | 0.18 |
| Example 7 | 5.23 | 4.99 | 0.24 |
| Comparative Example 1 | 4.78 | 4.11 | 0.67 |
| Comparative Example 2 | 4.59 | 3.81 | 0.78 |

Referring to Table 2, in the cases of Examples 1, 3, and 7, it was observed that there was almost no deviation in heating rates between the region near the bonding surface of the molded product attached to the Peltier element (region A) and the region relatively spaced from the bonding surface (region B), whereas in the cases of Comparative Examples 1 and 2, it was observed that the deviation in heating rate in each region was 0.6°C or higher, which was large.

In addition, when a current direction of the Peltier element was switched to change the temperature from 95°C to 25°C in the same manner as the heating rate described above, a cooling rate was calculated and compared, and it was confirmed that almost similar results were obtained.

It can be seen that the molded product prepared using the composite material in which the tin powder and the silver-coated copper nanowire are mixed has almost no deviation in the heating rate and the cooling rate between the region directly in contact with the heat source and the region relatively spaced away from the heat source. From this, it can be seen that the heat transfer efficiency of the molded product is significantly excellent, and it can be seen that the molded product can be applied as a thermal block of a PCR thermal cycler to improve the efficiency of gene amplification reaction and at the same time ensure reliability even in ultra-fast PCR.

Additionally, a PCR thermal block having the shape illustrated in FIG. 5 was manufactured by casting at 260°C using the composite material of Example 3. The manufactured PCR thermal block was mounted on a real-time PCR device (ExiCycler; Bioneer) and thermal characteristics were measured.

At this time, since the PCR reaction temperature was 95°C, the temperature was increased from 25°C to 95°C and then decreased from 95°C to 25°C, the rate of temperature increase and the rate of temperature decrease of the PCR cycler were compared three times with those of a PCR cycler to which a conventional aluminum PCR thermal block was applied, and the analysis results thereof were summarized in Table 3.

[Table 3]

|  | Application of thermal block manufactured using composite material of Example 3 | Application of aluminum thermal block | Improvement rate (%) |
|---|---|---|---|
| Rate of temperature increase (°C/s) | 3.87 | 3.11 | 24.4 |
|  | 4.14 | 3.17 | 30.6 |
|  | 4.07 | 3.14 | 29.6 |
| Rate of temperature decrease (°C/s) | -3.14 | -2.39 | 31.3 |
|  | -3.13 | -2.34 | 33.7 |
|  | -3.09 | -2.31 | 33.7 |

As can be seen in Table 3, in the case of the PCR thermal cycler to which the PCR thermal block manufactured using the composite material in which the tin powder and the silver-coated copper nanowire were mixed was applied, the average rate of temperature increase was 28.2% and the average rate of temperature decrease was 32.3%, which were superior to those using an aluminum PCR thermal block.

Hereinabove, although the present invention has been described by specific matters and limited embodiments, they have been provided only for assisting in the entire understanding of the present invention. Therefore, the present invention is not limited to the embodiments, and various modifications and changes may be made by those skilled in the art to which the present invention pertains from this description.

Therefore, the spirit of the present invention should not be limited to the described embodiments, but the claims and all modifications equal or equivalent to the claims are intended to fall within the spirit of the present invention.

**Claims**

1. A composite material for a thermal block of a thermal cycler, the composite material comprising:

   a powder metal that is a first metal or an alloy containing the first metal; and
   a metal nanowire having a core-shell structure in which a shell containing a third metal is positioned on a core containing a second metal.

2. The composite material of claim 1, wherein the first metal is tin, and the alloy is one or more selected from the group consisting of tin-silver, tin-copper, tin-aluminum, tin-bismuth, tin-antimony, tin-copper-bismuth, tin-silver-bismuth, tin-copper-antimony, tin-silver-antimony, tin-copper-silver, tin-copper-silver-antimony, and tin-copper-silver-bismuth.

3. The composite material of claim 1, wherein the second metal is copper, and the third metal is silver or gold.

4. The composite material of claim 3, wherein the metal nanowire is a silver-coated copper nanowire.

5. The composite material of claim 4, wherein a peak intensity of Ag $3d_{5/2}$ of silver ($I_1$) and a peak intensity of Cu $2p_{3/2}$ of copper ($I_2$) of the metal nanowire in an X-ray photoelectron spectroscopy spectrum satisfy the following Expression 1:

$$\text{(Expression 1)}$$

$$I_2/I_1 \leq 0.2.$$

6. The composite material of claim 1, wherein the metal nanowire has a diameter of 100 to 500 nm and an aspect ratio of 5 to 100.

7. The composite material of claim 1, wherein a ratio ($D_p/D_w$) of a particle diameter ($D_p$) of the powder metal:a diameter ($D_w$) of the metal nanowire is 1:0.0001 to 0.01.

8. The composite material of claim 1, wherein a weight ratio of the powder metal:the metal nanowire is 1:0.001 to 0.1.

9. A low-specific-heat thermal block of a thermal cycler manufactured by sintering, molding, rolling, or casting the composite material of any one of claims 1 to 8.

10. A low-specific-heat thermal block of a thermal cycler, the thermal block comprising:

    tin or a tin alloy; and
    a silver-coated copper nanowire.

11. The thermal block of claim 10, wherein a weight ratio of the tin or the tin alloy:the silver-coated copper nanowire is 1:0.001 to 0.1.

12. The thermal block of claim 10, wherein a peak intensity of Ag $3d_{5/2}$ of silver ($I_1$) and a peak intensity of Cu $2p_{3/2}$ of copper ($I_2$) of the silver-coated copper nanowire in an X-ray photoelectron spectroscopy spectrum satisfy the following Expression 1,

$$\text{(Expression 1)}$$

$$I_2/I_1 \leq 0.2.$$

13. The thermal block of claim 10, wherein a thermal conductivity of the thermal block is 70 to 100 W/ (m·K) at 21°C.

14. A polymerase chain reaction (PCR) thermal cycler comprising,

a heating element; and
a thermal block having one end in contact with one surface of the heating element and the other end positioned opposite to the one end and having an insertion hole,
wherein the thermal block is formed by sintering, molding, rolling, or casting the composite material of any one of claims 1 to 8.

15. The PCR thermal cycler of claim 14, wherein the thermal block satisfies the following Expression 2:

$$(\text{Expression } 2)$$

$$H_a - H_b \leq \pm 0.5 \ {}^\circ C/sec$$

(in Expression 2, $H_a$ is a heating rate in a region of 0.1 to 0.3 t defined as a region A, and $H_b$ is a heating rate in a region of 0.7 t to 1.0 t defined as a region B, based on one end in contact with one surface of a heating element in a thermal block having a height of t).

FIG. 1

FIG. 2

## INTERNATIONAL SEARCH REPORT

| International application No. |
|---|
| **PCT/KR2023/013381** |

**A. CLASSIFICATION OF SUBJECT MATTER**

**C09K 5/14**(2006.01)i; **B01L 7/00**(2006.01)i; **C22C 13/00**(2006.01)i; **B22F 1/054**(2022.01)i

According to International Patent Classification (IPC) or to both national classification and IPC

**B. FIELDS SEARCHED**

Minimum documentation searched (classification system followed by classification symbols)

C09K 5/14(2006.01); B01L 3/00(2006.01); B01L 7/00(2006.01); B22F 1/00(2006.01); B22F 9/18(2006.01); C12M 1/34(2006.01); C12M 1/38(2006.01); C12P 19/34(2006.01); G01N 33/52(2006.01); G01N 33/543(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 합금(alloy), 열순환기(thermal circulator), 열블록(thermal block), 금속 와이어 (metal wire)

**C. DOCUMENTS CONSIDERED TO BE RELEVANT**

| Category* | Citation of document, with indication, where appropriate, of the relevant passages | Relevant to claim No. |
|---|---|---|
| Y | US 2008-0003649 A1 (MALTEZOS, G. et al.) 03 January 2008 (2008-01-03) See paragraph [0098]; and claims 1-51. | 1-15 |
| Y | KR 10-2015-0145892 A (BIONEER CORPORATION) 31 December 2015 (2015-12-31) See paragraphs [0049]-[0064]; and claims 1-19. | 1-15 |
| A | KR 10-2018-0133720 A (KONKUK UNIVERSITY INDUSTRIAL COOPERATION CORP.) 17 December 2018 (2018-12-17) See entire document. | 1-15 |
| A | US 2011-0159547 A1 (YU, C.-S. et al.) 30 June 2011 (2011-06-30) See entire document. | 1-15 |
| A | WO 2021-260436 A1 (BJS IP LTD.) 30 December 2021 (2021-12-30) See entire document. | 1-15 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 December 2023** | **14 December 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/013381**

| Patent document cited in search report | | | Publication date (day/month/year) | Patent family member(s) | | | Publication date (day/month/year) |
|---|---|---|---|---|---|---|---|
| US | 2008-0003649 | A1 | 03 January 2008 | US | 2009-0275014 | A1 | 05 November 2009 |
| | | | | US | 2009-0275113 | A1 | 05 November 2009 |
| | | | | US | 2012-0171678 | A1 | 05 July 2012 |
| | | | | US | 8003370 | B2 | 23 August 2011 |
| | | | | US | 8008046 | B2 | 30 August 2011 |
| | | | | US | 8232091 | B2 | 31 July 2012 |
| | | | | US | 9316586 | B2 | 19 April 2016 |
| KR | 10-2015-0145892 | A | 31 December 2015 | CN | 106536094 | A | 22 March 2017 |
| | | | | CN | 106536094 | B | 22 October 2019 |
| | | | | EP | 3159078 | A1 | 26 April 2017 |
| | | | | EP | 3159078 | A4 | 07 March 2018 |
| | | | | EP | 3159078 | B1 | 16 October 2019 |
| | | | | JP | 2017-523306 | A | 17 August 2017 |
| | | | | JP | 6379228 | B2 | 22 August 2018 |
| | | | | US | 2017-0140846 | A1 | 18 May 2017 |
| | | | | WO | 2015-194850 | A1 | 23 December 2015 |
| KR | 10-2018-0133720 | A | 17 December 2018 | KR | 10-1990426 | B1 | 18 June 2019 |
| US | 2011-0159547 | A1 | 30 June 2011 | CN | 101298656 | A | 05 November 2008 |
| | | | | CN | 101298656 | B | 21 July 2010 |
| | | | | US | 8389273 | B2 | 05 March 2013 |
| WO | 2021-260436 | A1 | 30 December 2021 | CN | 116133754 | A | 16 May 2023 |
| | | | | EP | 4171816 | A1 | 03 May 2023 |
| | | | | JP | 2023-532054 | A | 26 July 2023 |
| | | | | KR | 10-2023-0031299 | A | 07 March 2023 |
| | | | | US | 2023-0249189 | A1 | 10 August 2023 |

Form PCT/ISA/210 (patent family annex) (July 2022)